# EUROPEAN PATENT APPLICATION

(11) **EP 4 279 338 A1**
(43) Date of publication of application: **22.11.2023**
(21) Application number: 23173974.9
(22) Date of filing: 17.05.2023
(51) Int. Cl.: B60R 16/023, G05B 23/02, B60L 3/00

(54) **CONTROL METHOD AND SYSTEM FOR VEHICLE, VEHICLE-MOUNTED CONTROL DEVICE, AND VEHICLE**

(30) Priority: 19.05.2022 CN 202210557995
(71) Applicant: XPT EDS (Hefei) Co., Ltd., Hefei City, Anhui 230601 (CN)
(72) Inventor: YUAN, Yi, Jiading Shangha (CN)
(74) Representative: Vossius & Partner Patentanwälte Rechtsanwälte mbB

(57) **Abstract**

The disclosure relates to the field of vehicle technologies, and specifically, to a control method and system for a vehicle, a vehicle-mounted control device, and a vehicle. To resolve a problem that costs increase because an existing vehicle needs to be equipped with an additional diagnostics sensor to carry out health diagnosis of an electric drive system, the vehicle in the disclosure is provided with an electric drive system, and the control method for a vehicle in the disclosure includes: substituting an obtained vehicle control parameter of the vehicle into a preset first correlation matrix model to obtain a temperature, namely, a first temperature value, of a component; obtaining an actual temperature, namely, a second temperature value, of the component of the electric drive system; calculating a difference between the second temperature value and the first temperature value to obtain a temperature residual value; and determining health of the component of the electric drive system based on the temperature residual value. Through the use of a temperature sensor required in protection of the electric drive system and without introducing an additional diagnostics sensor, a diagnostics system has zero hardware cost. A health status of the component of the electric drive system is determined based on different thermal performance of the component and based on the same vehicle control parameter.

## Description

### Technical Field

The disclosure relates to the field of vehicle technologies, and specifically, to a control method and system for a vehicle, a vehicle-mounted control device, and a vehicle.

### Background Art

Reliability of components and functions of vehicles is crucial for the industry. To improve reliability of a vehicle, one of important means in the vehicle field is to use a monitoring device to monitor statuses of components or functions in real time, to quickly identify and replace a component that is likely to fail and improve reliability of a system or functions. An electric drive system is a core component for ensuring operating of an electric vehicle, and is configured to drive the electric vehicle to travel. The electric drive system includes two parts: mechanical parts and electrical parts. Reliability of the electric drive system is determined by stability of components of the electric drive system.

In a current diagnostics solution, a special diagnostics sensor such as a vibration sensor or an optical sensor needs to be introduced to monitor failures of the components of the electric drive system. The introduction of the diagnostics sensor causes additional costs. Particularly, a sensor used in a vehicle requires automotive-grade authentication. In addition, reliability of a high-precision diagnostics sensor is limited. This prevents the diagnostics sensor from performing reliable full-period monitoring on the vehicle. Moreover, in a conventional monitoring and diagnostics solution, hardware and software are strongly coupled, and it is difficult to implement an upgrade after deployment.

Correspondingly, a new control method for a vehicle is required in the art to resolve a problem that costs increase because an existing vehicle needs to be equipped with an additional diagnostics sensor to carry out health diagnosis of an electric drive system.

### Summary

The disclosure is intended to resolve the above technical problem, that is, resolve a problem that costs increase because an existing vehicle needs to be equipped with an additional diagnostics sensor to carry out health diagnosis of an electric drive system.

According to a first aspect, the disclosure provides a control method for a vehicle, where the vehicle is provided with an electric drive system, and the control method includes:
substituting an obtained vehicle control parameter of the vehicle into a preset first correlation matrix model to obtain a temperature, namely, a first temperature value, of a component of the electric drive system, where the first correlation matrix model is a correlation matrix model between the vehicle control parameter of the vehicle and the temperature of the component of the electric drive system;
obtaining an actual temperature, namely, a second temperature value, of the component of the electric drive system, where the actual temperature is a value measured by a temperature measuring apparatus on the component;
calculating a difference between the second temperature value and the first temperature value to obtain a temperature residual value; and
determining health of the component of the electric drive system based on the temperature residual value.

In a preferred technical solution of the control method for a vehicle, the step of "substituting an obtained vehicle control parameter of the vehicle into a preset first correlation matrix model to obtain a temperature, namely, a first temperature value, of a component of the electric drive system" further includes:
substituting the obtained vehicle control parameter into a preset second correlation matrix model to obtain an actual working condition parameter of the electric drive system, where the second correlation matrix model is a correlation matrix model between the actual working condition parameter of the electric drive system and the vehicle control parameter of the vehicle; and
substituting the actual working condition parameter of the electric drive system into a preset third correlation matrix model to obtain the temperature, namely, the first temperature value, of the component of the electric drive system, where the third correlation matrix model is a correlation matrix model between the actual working condition parameter of the electric drive system and the temperature of the component.

In a preferred technical solution of the control method for a vehicle, the step of "substituting the obtained vehicle control parameter into a preset second correlation matrix model to obtain an actual working condition parameter of the electric drive system" further includes:
obtaining an operating parameter of the electric drive system; and
substituting the obtained vehicle control parameter and the operating parameter into a preset fourth correlation matrix model to obtain the actual working condition parameter of the electric drive system, where the fourth correlation matrix model is a correlation matrix model between the actual working condition parameter of the electric drive system, the operating parameter of the electric drive system, and the vehicle control parameter of the vehicle.

In a preferred technical solution of the control method for a vehicle, the step of "determining health of the component of the electric drive system based on the temperature residual value" further includes:
substituting the temperature residual value into a preset fifth correlation matrix model to obtain the health of the component of the electric drive system, where the fifth correlation matrix model is a correlation matrix model between the health of the component of the electric drive system and the temperature residual value of the component.

In a preferred technical solution of the control method for a vehicle, the step of "substituting the obtained vehicle control parameter into a preset second correlation matrix model to obtain an actual working condition parameter of the electric drive system" further includes:
substituting the vehicle control parameter into the preset second correlation matrix model to obtain a first actual working condition parameter of the electric drive system;
obtaining a second actual working condition parameter of the electric drive system that is measured a first preset time earlier; and
substituting the first actual working condition parameter and the second actual working condition parameter into a preset first fitting formula to obtain the actual working condition parameter of the electric drive system, where the first fitting formula is specifically as follows: m₃ = K₁m₁ + K₂m₂, where K₁ and K₂ are fitting coefficients, m₁ is the first actual working condition parameter, m₂ is the second actual working condition parameter, and m₃ is the actual working condition parameter of the electric drive system.

In a preferred technical solution of the control method for a vehicle, the step of "substituting the obtained vehicle control parameter into a preset second correlation matrix model to obtain an actual working condition parameter of the electric drive system" further includes:
obtaining the vehicle control parameter of the vehicle, namely, a first vehicle control parameter;
obtaining a vehicle control parameter of the vehicle that is measured a second preset time earlier, namely, a second vehicle control parameter;
substituting the first vehicle control parameter and the second vehicle control parameter into a preset second fitting formula to obtain a third vehicle control parameter, where the second fitting formula is specifically as follows: n₃ = P₁n₁ + P₂n₂, where P₁ and P₂ are fitting coefficients, n₁ is the first vehicle control parameter, n₂ is the second vehicle control parameter, and n₃ is the third vehicle control parameter; and
substituting the third vehicle control parameter into the preset second correlation matrix model to obtain the actual working condition parameter of the electric drive system.

In a preferred technical solution of the control method for a vehicle, after the step of "substituting the temperature residual value into a preset fifth correlation matrix model to obtain the health of the component of the electric drive system", the control method further includes:
generating an alarm when the health of the component is poor.

In a preferred technical solution of the control method for a vehicle, the step of "determining health of the component of the electric drive system based on the temperature residual value" further includes:
when the temperature residual value is greater than or equal to a first preset temperature value, determining that the health of the component of the electric drive system is poor; and/or
when the temperature residual value is less than the first preset temperature value, determining that the health of the component of the electric drive system is good.

In a preferred technical solution of the control method for a vehicle, a step of establishing the preset first correlation matrix model includes:
generating an initial first correlation matrix model; and
training the initial first correlation matrix model to obtain the preset first correlation matrix model.

According to a second aspect, the disclosure further provides a vehicle, including a processor and a memory, where the memory is adapted to store a plurality of program codes, and the program codes are adapted to be loaded and run by the processor to perform the control method for a vehicle according to any one of the above preferred technical solutions.

According to a third aspect, the disclosure further provides a control system for a vehicle, where the vehicle is provided with an electric drive system, and the control system for a vehicle includes: a first temperature obtaining module configured to substitute an obtained vehicle control parameter of the vehicle into a preset first correlation matrix model to obtain a temperature, namely, a first temperature value, of a component of the electric drive system, where the first correlation matrix model is a correlation matrix model between the vehicle control parameter of the vehicle and the temperature of the component of the electric drive system;
a second temperature obtaining module configured to obtain an actual temperature, namely, a second temperature value, of the component of the electric drive system, where the actual temperature is a value measured by a temperature measuring apparatus on the component;
a difference module configured to calculate a difference between the first temperature value and the second temperature value to obtain a temperature residual value; and
a component health determining module configured to determine health of the component of the electric drive system based on the temperature residual value.

In a preferred technical solution of the control system for a vehicle, the first temperature obtaining module obtains the first temperature value in the following manner:
substituting the obtained vehicle control parameter into a preset second correlation matrix model to obtain an actual working condition parameter of the electric drive system, where the second correlation matrix model is a correlation matrix model between the actual working condition parameter of the electric drive system and the vehicle control parameter of the vehicle; and
substituting the actual working condition parameter of the electric drive system into a preset third correlation matrix model to obtain the temperature, namely, the first temperature value, of the component of the electric drive system, where the third correlation matrix model is a correlation matrix model between the actual working condition parameter of the electric drive system and the temperature of the component.

In a preferred technical solution of the control system for a vehicle, the actual working condition parameter used for the first temperature obtaining module to obtain the first temperature value is obtained in the following manner:
obtaining an operating parameter of the electric drive system; and
substituting the obtained vehicle control parameter and the operating parameter into a preset fourth correlation matrix model to obtain the actual working condition parameter of the electric drive system, where the fourth correlation matrix model is a correlation matrix model between the actual working condition parameter of the electric drive system, the operating parameter of the electric drive system, and the vehicle control parameter of the vehicle.

In a preferred technical solution of the control system for a vehicle, the component health determining module determines the health of the component of the electric drive system based on the temperature residual value in the following manner:
substituting the temperature residual value into a preset fifth correlation matrix model to obtain the health of the component of the electric drive system, where the fifth correlation matrix model is a correlation matrix model between the health of the component of the electric drive system and the temperature residual value of the component.

In a preferred technical solution of the control system for a vehicle, the actual working condition parameter used for the first temperature obtaining module to obtain the first temperature value is obtained in the following manner:
substituting the obtained vehicle control parameter into the preset second correlation matrix model to obtain a first actual working condition parameter of the electric drive system;
obtaining a second actual working condition parameter of the electric drive system that is measured a first preset time earlier; and
substituting the first actual working condition parameter and the second actual working condition parameter into a preset first fitting formula to obtain the actual working condition parameter of the electric drive system, where the first fitting formula is specifically as follows: m₃ = K₁m₁ + K₂m₂, where K₁ and K₂ are fitting coefficients, m₁ is the first actual working condition parameter, m₂ is the second actual working condition parameter, and m₃ is the actual working condition parameter of the electric drive system.

In a preferred technical solution of the control system for a vehicle, the actual working condition parameter used for the first temperature obtaining module to obtain the first temperature value is obtained in the following manner:
obtaining the vehicle control parameter of the vehicle, namely, a first vehicle control parameter;
obtaining a vehicle control parameter of the vehicle that is measured a second preset time earlier, namely, a second vehicle control parameter;
substituting the first vehicle control parameter and the second vehicle control parameter into a preset second fitting formula to obtain a third vehicle control parameter, where the second fitting formula is specifically as follows: n₃ = P₁n₁ + P₂n₂, where P₁ and P₂ are fitting coefficients, n₁ is the first vehicle control parameter, n₂ is the second vehicle control parameter, and n₃ is the third vehicle control parameter; and
substituting the third vehicle control parameter into the preset second correlation matrix model to obtain the actual working condition parameter of the electric drive system.

In a preferred technical solution of the control system for a vehicle, the control system for a vehicle further includes:
an alarm module configured to generate an alarm when the health of the component is poor.

In a preferred technical solution of the control system for a vehicle, the component health determining module determines the health of the component of the electric drive system in the following manner:
when the temperature residual value is greater than or equal to a first preset temperature value, determining that the health of the component of the electric drive system is poor; and/or
when the temperature residual value is less than the first preset temperature value, determining that the health of the component of the electric drive system is good.

In a preferred technical solution of the control system for a vehicle, the control system for a vehicle includes:
a correlation matrix model generation module configured to generate an initial first correlation matrix model; and
a correlation matrix model optimization module configured to train the initial first correlation matrix model to obtain the preset first correlation matrix model.

According to a fourth aspect, the disclosure further provides a vehicle-mounted control device, including a processor, where the processor is adapted to load a program to perform the control method for a vehicle according to any one of the above preferred technical solutions.

In a preferred technical solution of the vehicle-mounted control device, the vehicle-mounted control device is an ECU of the vehicle.

Solution 1: A control method for a vehicle, where the vehicle is provided with an electric drive system, and the control method includes:
substituting an obtained vehicle control parameter of the vehicle into a preset first correlation matrix model to obtain a temperature, namely, a first temperature value, of a component of the electric drive system, where the first correlation matrix model is a correlation matrix model between the vehicle control parameter of the vehicle and the temperature of the component of the electric drive system;
obtaining an actual temperature, namely, a second temperature value, of the component of the electric drive system, where the actual temperature is a value measured by a temperature measuring apparatus on the component;
calculating a difference between the second temperature value and the first temperature value to obtain a temperature residual value; and
determining health of the component of the electric drive system based on the temperature residual value.

Solution 2: The control method for a vehicle according to solution 1, where the step of "substituting an obtained vehicle control parameter of the vehicle into a preset first correlation matrix model to obtain a temperature, namely, a first temperature value, of a component of the electric drive system" further includes:
substituting the obtained vehicle control parameter into a preset second correlation matrix model to obtain an actual working condition parameter of the electric drive system, where the second correlation matrix model is a correlation matrix model between the actual working condition parameter of the electric drive system and the vehicle control parameter of the vehicle; and
substituting the actual working condition parameter of the electric drive system into a preset third correlation matrix model to obtain the temperature, namely, the first temperature value, of the component of the electric drive system, where the third correlation matrix model is a correlation matrix model between the actual working condition parameter of the electric drive system and the temperature of the component.

Solution 3: The control method for a vehicle according to solution 2, where the step of "substituting the obtained vehicle control parameter into a preset second correlation matrix model to obtain an actual working condition parameter of the electric drive system" further includes:
obtaining an operating parameter of the electric drive system; and
substituting the obtained vehicle control parameter and the operating parameter into a preset fourth correlation matrix model to obtain the actual working condition parameter of the electric drive system, where the fourth correlation matrix model is a correlation matrix model between the actual working condition parameter of the electric drive system, the operating parameter of the electric drive system, and the vehicle control parameter of the vehicle.

Solution 4: The control method for a vehicle according to solution 1, where the step of "determining health of the component of the electric drive system based on the temperature residual value" further includes:
substituting the temperature residual value into a preset fifth correlation matrix model to obtain the health of the component of the electric drive system, where the fifth correlation matrix model is a correlation matrix model between the health of the component of the electric drive system and the temperature residual value of the component.

Solution 5: The control method for a vehicle according to solution 2, where the step of "substituting the obtained vehicle control parameter into a preset second correlation matrix model to obtain an actual working condition parameter of the electric drive system" further includes:
substituting the vehicle control parameter into the preset second correlation matrix model to obtain a first actual working condition parameter of the electric drive system;
obtaining a second actual working condition parameter of the electric drive system that is measured a first preset time earlier; and
substituting the first actual working condition parameter and the second actual working condition parameter into a preset first fitting formula to obtain the actual working condition parameter of the electric drive system, where the first fitting formula is specifically as follows: m₃ = K₁m₁ + K₂m₂, where K₁ and K₂ are fitting coefficients, m₁ is the first actual working condition parameter, m₂ is the second actual working condition parameter, and m₃ is the actual working condition parameter of the electric drive system.

Solution 6: The control method for a vehicle according to solution 2, where the step of "substituting the obtained vehicle control parameter into a preset second correlation matrix model to obtain an actual working condition parameter of the electric drive system" further includes:
obtaining the vehicle control parameter of the vehicle, namely, a first vehicle control parameter;
obtaining a vehicle control parameter of the vehicle that is measured a second preset time earlier, namely, a second vehicle control parameter;
substituting the first vehicle control parameter and the second vehicle control parameter into a preset second fitting formula to obtain a third vehicle control parameter, where the second fitting formula is specifically as follows: n₃ = P₁n₁ + P₂n₂, where P₁ and P₂ are fitting coefficients, n₁ is the first vehicle control parameter, n₂ is the second vehicle control parameter, and n₃ is the third vehicle control parameter; and
substituting the third vehicle control parameter into the preset second correlation matrix model to obtain the actual working condition parameter of the electric drive system.

Solution 7: The control method for a vehicle according to solution 4, where after the step of "substituting the temperature residual value into a preset fifth correlation matrix model to obtain the health of the component of the electric drive system", the control method further includes:
generating an alarm when the health of the component is poor.

Solution 8: The control method for a vehicle according to solution 1, where the step of "determining health of the component of the electric drive system based on the temperature residual value" further includes:
when the temperature residual value is greater than or equal to a first preset temperature value, determining that the health of the component of the electric drive system is poor; and/or
when the temperature residual value is less than the first preset temperature value, determining that the health of the component of the electric drive system is good.

Solution 9: The control method for a vehicle according to solution 1, where a step of establishing the preset first correlation matrix model includes:
generating an initial first correlation matrix model; and
training the initial first correlation matrix model to obtain the preset first correlation matrix model.

Solution 10: A vehicle, including a processor and a memory, where the memory is adapted to store a plurality of program codes, and the program codes are adapted to be loaded and run by the processor to perform the control method for a vehicle according to any one of solutions 1 to 9.

Solution 11: A control system for a vehicle, where the vehicle is provided with an electric drive system, and the control system for a vehicle includes:
a first temperature obtaining module configured to substitute an obtained vehicle control parameter of the vehicle into a preset first correlation matrix model to obtain a temperature, namely, a first temperature value, of a component of the electric drive system, where the first correlation matrix model is a correlation matrix model between the vehicle control parameter of the vehicle and the temperature of the component of the electric drive system;
a second temperature obtaining module configured to obtain an actual temperature, namely, a second temperature value, of the component of the electric drive system, where the actual temperature is a value measured by a temperature measuring apparatus on the component;
a difference module configured to calculate a difference between the first temperature value and the second temperature value to obtain a temperature residual value; and
a component health determining module configured to determine health of the component of the electric drive system based on the temperature residual value.

Solution 12: The control system for a vehicle according to solution 11, where the first temperature obtaining module obtains the first temperature value in the following manner:
substituting the obtained vehicle control parameter into a preset second correlation matrix model to obtain an actual working condition parameter of the electric drive system, where the second correlation matrix model is a correlation matrix model between the actual working condition parameter of the electric drive system and the vehicle control parameter of the vehicle; and
substituting the actual working condition parameter of the electric drive system into a preset third correlation matrix model to obtain the temperature, namely, the first temperature value, of the component of the electric drive system, where the third correlation matrix model is a correlation matrix model between the actual working condition parameter of the electric drive system and the temperature of the component.

Solution 13: The control system for a vehicle according to solution 12, where the actual working condition parameter used for the first temperature obtaining module to obtain the first temperature value is obtained in the following manner:
obtaining an operating parameter of the electric drive system; and
substituting the obtained vehicle control parameter and the operating parameter into a preset fourth correlation matrix model to obtain the actual working condition parameter of the electric drive system, where the fourth correlation matrix model is a correlation matrix model between the actual working condition parameter of the electric drive system, the operating parameter of the electric drive system, and the vehicle control parameter of the vehicle.

Solution 14: The control system for a vehicle according to solution 11, where the component health determining module determines the health of the component of the electric drive system based on the temperature residual value in the following manner:
substituting the temperature residual value into a preset fifth correlation matrix model to obtain the health of the component of the electric drive system, where the fifth correlation matrix model is a correlation matrix model between the health of the component of the electric drive system and the temperature residual value of the component.

Solution 15: The control system for a vehicle according to solution 12, where the actual working condition parameter used for the first temperature obtaining module to obtain the first temperature value is obtained in the following manner:
substituting the obtained vehicle control parameter into the preset second correlation matrix model to obtain a first actual working condition parameter of the electric drive system;
obtaining a second actual working condition parameter of the electric drive system that is measured a first preset time earlier; and
substituting the first actual working condition parameter and the second actual working condition parameter into a preset first fitting formula to obtain the actual working condition parameter of the electric drive system, where the first fitting formula is specifically as follows: m₃ = K₁m₁ + K₂m₂, where K₁ and K₂ are fitting coefficients, m₁ is the first actual working condition parameter, m₂ is the second actual working condition parameter, and m₃ is the actual working condition parameter of the electric drive system.

Solution 16: The control system for a vehicle according to solution 12, where the actual working condition parameter used for the first temperature obtaining module to obtain the first temperature value is obtained in the following manner:
obtaining the vehicle control parameter of the vehicle, namely, a first vehicle control parameter;
obtaining a vehicle control parameter of the vehicle that is measured a second preset time earlier, namely, a second vehicle control parameter;
substituting the first vehicle control parameter and the second vehicle control parameter into a preset second fitting formula to obtain a third vehicle control parameter, where the second fitting formula is specifically as follows: n₃ = P₁n₁ + P₂n₂, where P₁ and P₂ are fitting coefficients, n₁ is the first vehicle control parameter, n₂ is the second vehicle control parameter, and n₃ is the third vehicle control parameter; and
substituting the third vehicle control parameter into the preset second correlation matrix model to obtain the actual working condition parameter of the electric drive system.

Solution 17: The control system for a vehicle according to solution 14, where the control system for a vehicle further includes:
an alarm module configured to generate an alarm when the health of the component is poor.

Solution 18: The control system for a vehicle according to solution 11, where the component health determining module determines the health of the component of the electric drive system in the following manner:
when the temperature residual value is greater than or equal to a first preset temperature value, determining that the health of the component of the electric drive system is poor; and/or
when the temperature residual value is less than the first preset temperature value, determining that the health of the component of the electric drive system is good.

Solution 19: The control system for a vehicle according to solution 11, where the control system for a vehicle includes:
a correlation matrix model generation module configured to generate an initial first correlation matrix model; and
a correlation matrix model optimization module configured to train the initial first correlation matrix model to obtain the preset first correlation matrix model.

Solution 20: A vehicle-mounted control device, including a processor, where the processor is adapted to load a program to perform the control method for a vehicle according to any one of solutions 1 to 9.

Solution 21: The vehicle-mounted control device according to solution 20, where the vehicle-mounted control device is an ECU of the vehicle.

It can be understood by those skilled in the art that the vehicle in the disclosure is provided with an electric drive system, and the control method for a vehicle in the disclosure includes: substituting an obtained vehicle control parameter of the vehicle into a preset first correlation matrix model to obtain a temperature, namely, a first temperature value, of a component; the first correlation matrix model is a correlation matrix model between the vehicle control parameter of the vehicle and the temperature of the component of the electric drive system; obtaining an actual temperature, namely, a second temperature value, of the component of the electric drive system; the actual temperature is a value measured by a temperature measuring apparatus on the component; calculating a difference between the second temperature value and the first temperature value to obtain a temperature residual value; and determining health of the component of the electric drive system based on the temperature residual value.

When the above technical solution is used, in the control method for a vehicle in the disclosure, without introducing an additional diagnostics sensor, a proposed diagnostics solution is based on a temperature measuring apparatus, usually a temperature sensor, required in protection of the electric drive system. The temperature sensor is required for overheat protection of each electric drive system, so that a diagnostics system has zero hardware cost. In addition, different thermal performance of the component of the electric drive system is observed and compared in a data-driven manner based on a same vehicle control parameter of the electric drive system, to determine a health status of the component. In addition, hardware is decoupled from diagnostics tasks, and algorithm performance is further improved through data accumulation. Specifically, the actual temperature, namely, the second temperature value, of the component is obtained by the temperature sensor already assembled on the component of the electric drive system; the vehicle control parameter is substituted into the first correlation matrix model between the vehicle control parameter of the vehicle and the temperature of the component of the electric drive system, to obtain a theoretical temperature value, namely, the first temperature value, of the component in a health status based on the vehicle control parameter; and the actual temperature is compared with the theoretical temperature, that is, the difference between the second temperature value and the first temperature value is calculated to obtain the temperature residual value, so as to obtain a health status of the component.

When components of the electric drive system are healthy and operate in steady states, a thermal status of the system is stable. When health of most components deteriorates, operating efficiency of the system decreases, and more heat is generated. In the diagnostics solution of the disclosure, in a data-driven manner, the first correlation matrix model between the vehicle control parameter and the temperature of the component of the electric drive system is established based on data measured in massive deployment. Based on a preset vehicle control parameter of the vehicle, such as a set vehicle speed, a set torque, a set elevation angle, or a set flow rate of a motor drive cooling system, for example, when the vehicle is controlled to be at a high torque, a current value of the electric drive system increases accordingly, the entire electric drive system generates a large amount of heat, and the temperature sensor senses a high temperature. Then the temperature sensed by the temperature sensor is compared with temperature information corresponding to the vehicle control parameter. When the temperature sensed by the temperature sensor is higher, it indicates that thermal performance of the component is abnormal, and a health status is poor. This implements overall monitoring on the electric drive system, improves the diagnostic accuracy of a health status of the electric drive system, and implements pre-warning for failures. In addition, accuracy of a correlation matrix determines efficiency of this algorithm. An initial value of the correlation matrix is a reference matrix obtained through theoretical calculation and a large number of experiments performed on electric drive systems of a same model. Based on this, the algorithm and the correlation matrix are subsequently upgraded online based on actual performance of a same vehicle model, and effectiveness of the diagnostics system is driven based on obtained data. This avoids disadvantages of strong coupling between software and hardware and difficulty in upgrades in a conventional monitoring and diagnostics solution.

### Brief Description of the Drawings

Preferred implementations of the disclosure are described below with reference to the drawings, in which:
FIG. 1 is a flowchart of main steps of a control method for a vehicle according to the disclosure;
FIG. 2 is a flowchart of steps of a first implementation of a control method for a vehicle according to the disclosure;
FIG. 3 is a flowchart of steps of a second implementation of a control method for a vehicle according to the disclosure;
FIG. 4 is a flowchart of steps of a third implementation of a control method for a vehicle according to the disclosure;
FIG. 5 is a flowchart of steps of a fourth implementation of a control method for a vehicle according to the disclosure; and
FIG. 6 is a flowchart of steps of a fifth implementation of a control method for a vehicle according to the disclosure.

### Detailed Description of Embodiments

Preferred implementations of the disclosure are described below with reference to the accompanying drawings. Those skilled in the art should understand that these implementations are only used to explain the technical principles of the disclosure, and are not intended to limit the protection scope of the disclosure. Those skilled in the art can make adjustments according to requirements, so as to adapt to specific application scenarios. For example, although the disclosure is described based on an electric vehicle, this is not restrictive. The vehicle in the disclosure may be an electric tricycle, an electric bicycle, or the like, or may be a gasoline-electric hybrid vehicle.

It should be noted that, in the description of the disclosure, the terms "first", "second", "third", "fourth", and "fifth" are merely used for description, but cannot be understood as indicating or implying the relative importance.

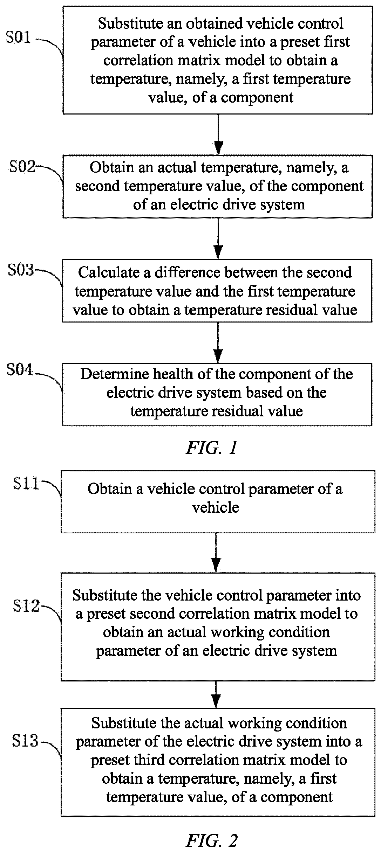

With reference to FIG. 1, to resolve a problem that costs increase because an existing vehicle needs to be equipped with an additional diagnostics sensor to carry out health diagnosis of an electric drive system, the disclosure provides a control method for a vehicle, where the vehicle is provided with an electric drive system, and the control method includes the following steps:
step S01: substituting an obtained vehicle control parameter of the vehicle into a preset first correlation matrix model to obtain a temperature, namely, a first temperature value, of a component, where the first correlation matrix model is a correlation matrix model between the vehicle control parameter of the vehicle and the temperature of the component of the electric drive system;
step S02: obtaining an actual temperature, namely, a second temperature value, of the component of the electric drive system; the actual temperature is a value measured by a temperature measuring apparatus on the component;
step S03: calculating a difference between the second temperature value and the first temperature value to obtain a temperature residual value; and
step S04: determining health of the component of the electric drive system based on the temperature residual value.

The above configuration has the following advantages: In the control method for a vehicle in the disclosure, without introducing an additional diagnostics sensor, a proposed diagnostics solution is based on a temperature measuring apparatus, usually a temperature sensor, required in protection of the electric drive system. The temperature sensor is required for overheat protection of each electric drive system, so that a diagnostics system has zero hardware cost. In addition, a health status of the component of the electric drive system is determined by observing and comparing different thermal performance of the component based on a same vehicle control parameter of the electric drive system in a data-driven manner. In addition, hardware is decoupled from diagnostics tasks, and algorithm performance is further improved through data accumulation. Specifically, the actual temperature, namely, the second temperature value, of the component is obtained by the temperature sensor already assembled on the component of the electric drive system; the vehicle control parameter is substituted into the first correlation matrix model between the vehicle control parameter of the vehicle and the temperature of the component of the electric drive system, to obtain a theoretical temperature value, namely, the first temperature value, of the component in a health status based on the vehicle control parameter; and the actual temperature is compared with the theoretical temperature, that is, the difference between the second temperature value and the first temperature value is calculated to obtain the temperature residual value, so as to obtain a health status of the component.

When components of the electric drive system are healthy and operate in steady states, a thermal status of the system is stable. When health of most components deteriorates, operating efficiency of the system decreases, and more heat is generated. In the diagnostics solution of the disclosure, in a data-driven manner, the first correlation matrix model between the vehicle control parameter and the temperature of the component of the electric drive system is established based on data measured in massive deployment. Based on a preset vehicle control parameter of the vehicle, such as a set vehicle speed, a set torque, a set elevation angle, or a set flow rate of a motor drive cooling system, for example, when the vehicle is controlled to be at a high torque, a current value of the electric drive system increases accordingly, the entire electric drive system generates a large amount of heat, and the temperature sensor senses a high temperature. Then the temperature sensed by the temperature sensor is compared with temperature information corresponding to the vehicle control parameter. When the temperature sensed by the temperature sensor is higher, it indicates that thermal performance of the component is abnormal, and a health status is poor. This implements overall monitoring on the electric drive system, improves the diagnostic accuracy of a health status of the electric drive system, and implements pre-warning for failures. In addition, accuracy of a correlation matrix determines efficiency of this algorithm. An initial value of the correlation matrix is a reference matrix obtained through theoretical calculation and a large number of experiments performed on electric drive systems of a same model. Based on this, the algorithm and the correlation matrix are subsequently upgraded online based on actual performance of a same vehicle model, and effectiveness of the diagnostics system is driven based on obtained data. This avoids disadvantages of strong coupling between software and hardware and difficulty in upgrades in a conventional monitoring and diagnostics solution.

It should be noted that the vehicle control parameter of the vehicle is a parameter that is preset in a control system of the vehicle and that is used for adjusting the vehicle. For example, the vehicle control parameter may be one or more of a set parameter of a motor drive cooling system, a set vehicle speed, a set torque, a set elevation angle, and the like. However, there are many vehicle control parameters, and those skilled in this art may select a vehicle control parameter according to a requirement. Therefore, a specific parameter type of the vehicle control parameter is not limited, and all vehicle control parameters fall within the protection scope of the disclosure. In addition, although the temperature measuring apparatus on the component that is used to detect the actual temperature of the component is described by using the temperature sensor in the electric drive system, the temperature measuring apparatus is not limited to the temperature sensor, and the actual temperature may alternatively be obtained through observation after being detected by using a thermometer. The temperature measuring apparatus varies depending on different models and structures of electric drive systems. Therefore, a manner of detecting the actual temperature and the temperature measuring apparatus are not limited, provided that the actual temperature of the component can be measured.

With reference to FIG. 2, in a possible implementation, the control method for a vehicle specifically includes the following steps:
step S11: obtaining the vehicle control parameter of the vehicle;
step S12: substituting the vehicle control parameter into a preset second correlation matrix model to obtain an actual working condition parameter of the electric drive system, where the second correlation matrix model is a correlation matrix model between the actual working condition parameter of the electric drive system and the vehicle control parameter of the vehicle; and
step S13: substituting the actual working condition parameter of the electric drive system into a preset third correlation matrix model to obtain the temperature, namely, the first temperature value, of the component, where the third correlation matrix model is a correlation matrix model between the actual working condition parameter of the electric drive system and the temperature of the component.

The vehicle control parameter of the vehicle is substituted into the second correlation matrix model to obtain an actual operating status of the electric drive system. The actual operating status of the electric drive system is indicated by the actual working condition parameter. The actual working condition parameter is substituted into the third correlation matrix model to estimate the temperature, namely, the first temperature value, corresponding to a health status of the component in the working condition. The temperature of the component is estimated based on the actual working condition parameter of the electric drive system, so that accuracy can be greatly improved.

It should be noted that the actual working condition parameter of the electric drive system may be one or more of an actual rational speed, an actual load, an actual current value, or an actual voltage value of the electric drive system, an actual parameter of the motor drive cooling system, or the like. The actual parameter of the motor drive cooling system is an actual flow rate, actual liquid outlet temperature, or the like of the motor drive cooling system, or may be another parameter of the motor drive cooling system that can indicate an actual operating status of the motor drive cooling system. Therefore, the actual working condition parameter of the electric drive system is not limited in the disclosure, and may be set by those skilled in the art according to a requirement, provided that the actual working condition parameter is a working condition parameter of the electric drive system during operating. Therefore, all actual working condition parameters fall within the protection scope of the disclosure.

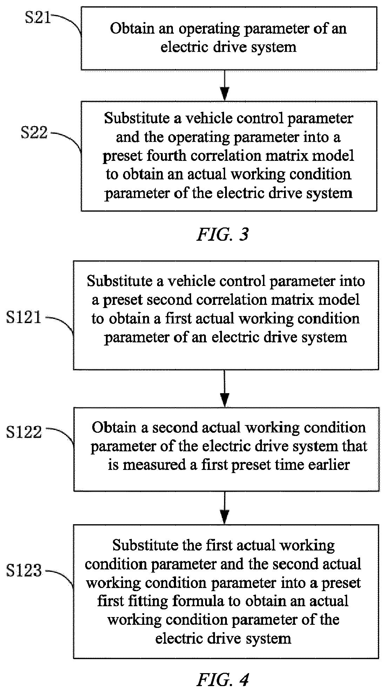

With reference to FIG. 3, in a possible implementation, step S12 further includes the following steps:
step S21: obtaining an operating parameter of the electric drive system; and
step S22: substituting the vehicle control parameter and the operating parameter into a preset fourth correlation matrix model to obtain the actual working condition parameter of the electric drive system, where the fourth correlation matrix model is a correlation matrix model between the actual working condition parameter of the electric drive system, the operating parameter of the electric drive system, and the vehicle control parameter of the vehicle.

The operating parameter is a parameter, which can be detected by a detection apparatus such as a sensor in the electric drive system, of the electric drive system in an operating status. Descriptions are provided below by using an example in which a current value and a voltage value are used as operating parameters. The electric drive system needs to be configured with both a current sensor and a voltage sensor. The fourth correlation matrix model between the actual working condition parameter of the electric drive system, the operating parameter of the electric drive system, and the vehicle control parameter is established, such that the actual working condition parameter of the electric drive system is determined based on both the operating parameter and the vehicle control parameter. In this way, when a current value and a voltage value of the electric drive system in the working condition and the vehicle control parameter are substituted into the fourth correlation matrix model, the actual working condition parameter of electric drive system can be obtained, and can more accurately indicate an actual operating status of the electric drive system. It should be noted that, in addition to the current value and the voltage value, the operating parameter may alternatively be a vibration value obtained by a vibration sensor in the electric drive system, a rotational speed value obtained by a rotational speed sensor, a rotation angle value obtained by a rotation angle sensor, a torque value obtained by a torque sensor, or the like. Therefore, a specific type of the operating parameter is not limited, provided that the operating parameter is an operating status parameter that can be obtained by the detection apparatus in the electric drive system. Those skilled in the art may set the operating parameter according to a requirement. In addition, step S21 may be performed before, after, or simultaneously with the step of obtaining the vehicle control parameter. This may be set by those skilled in the art according to a requirement. Therefore, all cases fall within the protection scope of the disclosure.

With reference to FIG. 4, in a possible implementation, step S12 further includes the following steps:
step S121: substituting the vehicle control parameter into the preset second correlation matrix model to obtain a first actual working condition parameter of the electric drive system;
step S122: obtaining a second actual working condition parameter of the electric drive system that is measured a first preset time earlier; and
step S123: substituting the first actual working condition parameter and the second actual working condition parameter into a preset first fitting formula to obtain the actual working condition parameter of the electric drive system, where the first fitting formula is specifically as follows: m₃ = K₁m₁ + K₂m₂, where K₁ and K₂ are fitting coefficients, m₁ is the first actual working condition parameter, m₂ is the second actual working condition parameter, and m₃ is the actual working condition parameter of the electric drive system.

An actual working condition of the electric drive system is further related to a previous working condition. Therefore, after an actual working condition parameter of the electric drive system that is measured this time, namely, the first actual working condition parameter, is obtained, an actual working condition parameter of the electric drive system that is measured a preset time earlier, namely, the second actual working condition parameter, is further obtained. The second actual working condition parameter may be directly obtained from a storage apparatus, or may be obtained by substituting a vehicle control parameter measured the first preset time earlier into the second correlation matrix model. Therefore, a manner of obtaining the second actual working condition parameter is not limited, and may be set by those skilled in the art according to a requirement. A more accurate actual working condition parameter is obtained through fitting analysis of two parameters measured at an interval of a preset time. Specifically, the first fitting formula is obtained through calculation and fitting based on data obtained in a plurality of experiments. K₁ and K₂ are fitting coefficients calculated based on data obtained in a plurality of experiments, and both are constants. The first actual working condition parameter and the second actual working condition parameter are substituted into the first fitting formula to obtain a working condition parameter of the electric drive system that is closer to an actual condition, so that a measured actual working condition parameter is more accurate.

It should be noted that the first preset time is set by those skilled in the art, and may be 1 min, 3 min, or the like. Therefore, the first preset time is not limited. In addition, a parameter measured earlier than the second actual working condition parameter may be additionally obtained. For example, a third actual working condition parameter measured the first preset time earlier than the second actual working condition parameter is obtained, and so on, and the third actual working condition parameter is substituted into a corresponding fitting formula. In the disclosure, the number of obtained working condition parameters is not limited, and a corresponding fitting formula is not limited either. This may be set by those skilled in the art according to a requirement.

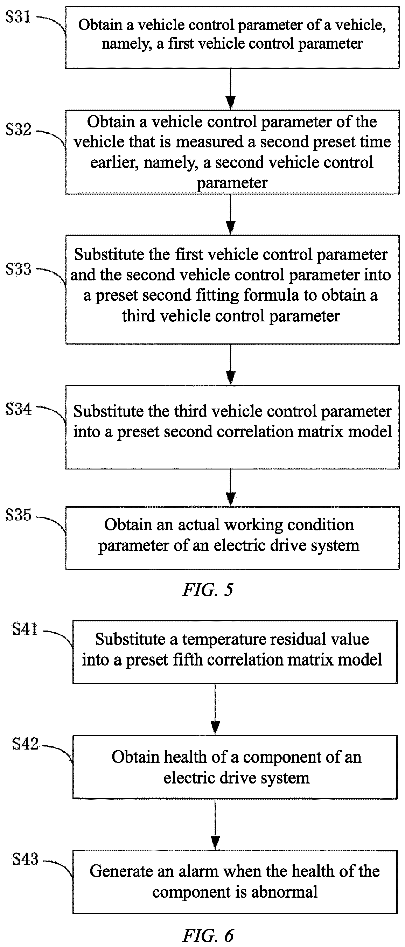

With reference to FIG. 5, in another possible implementation, a manner of obtaining the actual working condition parameter of the electric drive system is described. Specifically, step S11 and step S12 further include the following steps:
step S31: obtaining the vehicle control parameter of the vehicle, namely, a first vehicle control parameter;
step S32: obtaining a vehicle control parameter of the vehicle that is measured a second preset time earlier, namely, a second vehicle control parameter;
step S33: substituting the first vehicle control parameter and the second vehicle control parameter into a preset second fitting formula to obtain a third vehicle control parameter, where the second fitting formula is specifically as follows: n₃ = P₁n₁ + P₂n₂, where P₁ and P₂ are fitting coefficients, n₁ is the first vehicle control parameter, n₂ is the second vehicle control parameter, and n₃ is the third vehicle control parameter;
step S34: substituting the third vehicle control parameter into the preset second correlation matrix model; and
step S35: obtaining the actual working condition parameter of the electric drive system.

To obtain a more accurate actual working condition parameter of the electric drive system, this implementation provides another control method. To be specific, a vehicle control parameter of the vehicle that is measured this time, namely, the first vehicle control parameter, is obtained; then a vehicle control parameter of the vehicle that is measured a preset time earlier, namely, the second vehicle control parameter, is obtained; and fitting and analysis are performed on the two vehicle control parameters obtained at an interval, so that the obtained third vehicle control parameter is closer to an actual vehicle control parameter of the vehicle, and the actual working condition parameter of the electric drive system is more accurate. Specifically, the second fitting formula is obtained through calculation and fitting based on data obtained in a plurality of experiments. P₁ and P₂ are fitting coefficients calculated based on data obtained in a plurality of experiments, and both are constants. The first vehicle control parameter and the second vehicle control parameter are substituted into the second fitting formula to obtain a vehicle control parameter of the vehicle that is closer to an actual condition, namely, the third vehicle control parameter.

It should be noted that the second preset time is set by those skilled in the art, and may be 1 min, 3 min, or the like. Therefore, the second preset time is not limited. In addition, a parameter measured earlier than the second vehicle control parameter may be additionally obtained. For example, the third vehicle control parameter measured the second preset time earlier than the second vehicle control parameter is obtained, and so on, and the third vehicle control parameter is substituted into a corresponding fitting formula. In the disclosure, the number of obtained control parameters is not limited, and a corresponding fitting formula is not limited either. This may be set by those skilled in the art according to a requirement.

With reference to FIG. 6, in a possible implementation, step S04 further includes the following steps:
step S41: substituting the temperature residual value into a preset fifth correlation matrix model, where the fifth correlation matrix model is a correlation matrix model between the health of the component of the electric drive system and the temperature residual value of the component;
step S42: obtaining the health of the component of the electric drive system; and
step S43: generating an alarm when the health of the component is abnormal.

The temperature residual value is substituted into the correlation matrix model between the health of the component of the electric drive system and the temperature residual value of the component, to obtain the health of the component of the electric drive system. When the health of the component is poor, an alarm is generated to prompt the user that the electric drive system needs to be maintained.

Alternatively, in another possible implementation, step S04 further includes:
when the temperature residual value is greater than or equal to a first preset temperature value, determining that the health of the component of the electric drive system is poor; or
when the temperature residual value is less than the first preset temperature value, determining that the health of the component of the electric drive system is good.

In this implementation, the health of the component is determined based on the temperature residual value. When components of the electric drive system are healthy and operate in steady states, a thermal status of the system is stable. When health of most components deteriorates, operating efficiency of the system decreases, and more heat is generated. Therefore, the second temperature value measured by the temperature sensor is greater than a theoretical temperature value estimated by using a correlation matrix model, namely, the first temperature value. Therefore, the temperature residual value obtained based on the difference between the second temperature value and the first temperature value increases. When the temperature residual value is greater than the first preset temperature value, it is determined that the health of the component of the electric drive system is poor.

The preset first correlation matrix model, the preset second correlation matrix model, the preset third correlation matrix model, the preset fourth correlation matrix model, and the preset fifth correlation matrix model are established by using a same method. The first correlation matrix model is used as an example. A step of establishing the first correlation matrix model includes:
generating an initial first correlation matrix model; and
training the initial first correlation matrix model to obtain the preset first correlation matrix model.

Specifically, before the vehicle is brought to the market, the vehicle undergoes a large number of preliminary experiments, and an initial correlation matrix model may be provided. In the first three years of use of the vehicle, the vehicle is in a self-learning and calibration stage. Specifically, based on different working conditions, when the vehicle is in good condition, sensor temperature data and vehicle control parameter data in the electric drive system are recorded in real time; and the correlation matrix model is dynamically adjusted on the basis of initial values, and adjusted data is uploaded to a cloud to form big data.

After the vehicle is used for three years, a preset correlation matrix model is obtained through the training, and a monitoring system enters an operating status. Recalibration (checking a sensor status, a component status, and a working condition) is performed to upgrade the correlation matrix model only during maintenance of the vehicle.

Corresponding to the control method for a vehicle, the disclosure further provides a control system for a vehicle, where the control system for a vehicle includes:
a first temperature obtaining module configured to substitute an obtained vehicle control parameter of the vehicle into a preset first correlation matrix model to obtain a temperature, namely, a first temperature value, of a component of the electric drive system, where the first correlation matrix model is a correlation matrix model between the vehicle control parameter of the vehicle and the temperature of the component of the electric drive system;
a second temperature obtaining module configured to obtain an actual temperature, namely, a second temperature value, of the component of the electric drive system, where the actual temperature is a value measured by a temperature measuring apparatus on the component;
a difference module configured to calculate a difference between the first temperature value and the second temperature value to obtain a temperature residual value; and
a component health determining module configured to determine health of the component of the electric drive system based on the temperature residual value.

It should be noted that the vehicle control parameter of the vehicle is a parameter that is preset in a control system of the vehicle and that is used for adjusting the vehicle. For example, the vehicle control parameter may be one or more of a set parameter of a motor drive cooling system, a set vehicle speed, a set torque, a set elevation angle, and the like. However, there are many vehicle control parameters, and those skilled in this art may select a vehicle control parameter according to a requirement. Therefore, a specific parameter type of the vehicle control parameter is not limited, and all vehicle control parameters fall within the protection scope of the disclosure. In addition, although the temperature measuring apparatus on the component that is used to detect the actual temperature of the component is described by using the temperature sensor in the electric drive system, the temperature measuring apparatus is not limited to the temperature sensor, and the actual temperature may alternatively be obtained through observation after being detected by using a thermometer. The temperature measuring apparatus varies depending on different models and structures of electric drive systems. Therefore, a manner of detecting the actual temperature and the temperature measuring apparatus are not limited, provided that the actual temperature of the component can be measured.

In an implementation, the first temperature obtaining module obtains the first temperature value in the following manner:
substituting the obtained vehicle control parameter into a preset second correlation matrix model to obtain an actual working condition parameter of the electric drive system, where the second correlation matrix model is a correlation matrix model between the actual working condition parameter of the electric drive system and the vehicle control parameter of the vehicle; and
substituting the actual working condition parameter of the electric drive system into a preset third correlation matrix model to obtain the temperature, namely, the first temperature value, of the component of the electric drive system, where the third correlation matrix model is a correlation matrix model between the actual working condition parameter of the electric drive system and the temperature of the component.

It should be noted that the actual working condition parameter of the electric drive system may be one or more of an actual rational speed, an actual load, an actual current value, or an actual voltage value of the electric drive system, an actual parameter of the motor drive cooling system, or the like. The actual parameter of the motor drive cooling system is an actual flow rate, actual liquid outlet temperature, or the like of the motor drive cooling system, or may be another parameter of the motor drive cooling system that can indicate an actual operating status of the motor drive cooling system. Therefore, the actual working condition parameter of the electric drive system is not limited in the disclosure, and may be set by those skilled in the art according to a requirement, provided that the actual working condition parameter is a working condition parameter of the electric drive system during operating. Therefore, all actual working condition parameters fall within the protection scope of the disclosure.

In an implementation, the actual working condition parameter used for the first temperature obtaining module to obtain the first temperature value is obtained in the following manner:
obtaining an operating parameter of the electric drive system; and
substituting the obtained vehicle control parameter and the operating parameter into a preset fourth correlation matrix model to obtain the actual working condition parameter of the electric drive system, where the fourth correlation matrix model is a correlation matrix model between the actual working condition parameter of the electric drive system, the operating parameter of the electric drive system, and the vehicle control parameter of the vehicle.

In an implementation, the component health determining module determines the health of the component of the electric drive system based on the temperature residual value in the following manner:
substituting the temperature residual value into a preset fifth correlation matrix model to obtain the health of the component of the electric drive system, where the fifth correlation matrix model is a correlation matrix model between the health of the component of the electric drive system and the temperature residual value of the component.

In an implementation, the actual working condition parameter used for the first temperature obtaining module to obtain the first temperature value is obtained in the following manner:
substituting the obtained vehicle control parameter into the preset second correlation matrix model to obtain a first actual working condition parameter of the electric drive system;
obtaining a second actual working condition parameter of the electric drive system that is measured a first preset time earlier; and
substituting the first actual working condition parameter and the second actual working condition parameter into a preset first fitting formula to obtain the actual working condition parameter of the electric drive system, where the first fitting formula is specifically as follows: m₃ = K₁m₁ + K₂m₂, where K₁ and K₂ are fitting coefficients, m₁ is the first actual working condition parameter, m₂ is the second actual working condition parameter, and m₃ is the actual working condition parameter of the electric drive system.

In an implementation, the actual working condition parameter used for the first temperature obtaining module to obtain the first temperature value is obtained in the following manner:
obtaining the vehicle control parameter of the vehicle, namely, a first vehicle control parameter;
obtaining a vehicle control parameter of the vehicle that is measured a second preset time earlier, namely, a second vehicle control parameter;
substituting the first vehicle control parameter and the second vehicle control parameter into a preset second fitting formula to obtain a third vehicle control parameter, where the second fitting formula is specifically as follows: n₃ = P₁n₁ + P₂n₂, where P₁ and P₂ are fitting coefficients, n₁ is the first vehicle control parameter, n₂ is the second vehicle control parameter, and n₃ is the third vehicle control parameter; and
substituting the third vehicle control parameter into the preset second correlation matrix model to obtain the actual working condition parameter of the electric drive system.

In an implementation, the control system for a vehicle further includes:
an alarm module configured to generate an alarm when the health of the component is poor.

In an implementation, the component health determining module determines the health of the component of the electric drive system in the following manner:
when the temperature residual value is greater than or equal to a first preset temperature value, determining that the health of the component of the electric drive system is poor; or and/or
when the temperature residual value is less than the first preset temperature value, determining that the health of the component of the electric drive system is good.

In an implementation, the control system for a vehicle includes:
a correlation matrix model generation module configured to generate an initial first correlation matrix model; and
a correlation matrix model optimization module configured to train the initial first correlation matrix model to obtain the preset first correlation matrix model.

As described in the first paragraph of this section, the above implementations are only used to explain the principles of the disclosure, and are not intended to limit the protection scope of the disclosure. Those skilled in the art can adjust the above structures without departing from the principle of the disclosure, so that the disclosure is applicable to more specific application scenarios.

In addition, the disclosure further provides a vehicle-mounted control device, where the vehicle-mounted control device includes a processor, and the processor is adapted to load a program to perform the control method for a vehicle according to any one of the above preferred technical solutions.

In a preferred technical solution of the vehicle-mounted control device, the vehicle-mounted device is an ECU of the vehicle.

In addition, the disclosure further provides a vehicle, where the vehicle includes a processor and a memory, the memory is adapted to store a plurality of program codes, and the program codes are adapted to be loaded and run by the processor to perform the control method for a vehicle according to any one of the above preferred technical solutions.

Heretofore, the technical solutions of the disclosure have been described with reference to the preferred implementations shown in the accompanying drawings. However, those skilled in the art can readily understand that the protection scope of the disclosure is apparently not limited to these specific implementations. Those skilled in the art may make equivalent changes or substitutions to the related technical features without departing from the principle of the disclosure, and all the technical solutions with such changes or substitutions shall fall within the protection scope of the disclosure.

## Claims

1. A control method for a vehicle, wherein the vehicle is provided with an electric drive system, and the control method comprises:
substituting an obtained vehicle control parameter of the vehicle into a preset first correlation matrix model to obtain a temperature, namely, a first temperature value, of a component of the electric drive system, wherein the first correlation matrix model is a correlation matrix model between the vehicle control parameter of the vehicle and the temperature of the component of the electric drive system;
obtaining an actual temperature, namely, a second temperature value, of the component of the electric drive system, wherein the actual temperature is a value measured by a temperature measuring apparatus on the component;
calculating a difference between the second temperature value and the first temperature value to obtain a temperature residual value; and
determining health of the component of the electric drive system based on the temperature residual value.

2. The control method for a vehicle according to claim 1, wherein the step of "substituting an obtained vehicle control parameter of the vehicle into a preset first correlation matrix model to obtain a temperature, namely, a first temperature value, of a component of the electric drive system" further comprises:
substituting the obtained vehicle control parameter into a preset second correlation matrix model to obtain an actual working condition parameter of the electric drive system, wherein the second correlation matrix model is a correlation matrix model between the actual working condition parameter of the electric drive system and the vehicle control parameter of the vehicle; and
substituting the actual working condition parameter of the electric drive system into a preset third correlation matrix model to obtain the temperature, namely, the first temperature value, of the component of the electric drive system, wherein the third correlation matrix model is a correlation matrix model between the actual working condition parameter of the electric drive system and the temperature of the component.

3. The control method for a vehicle according to claim 2, wherein the step of "substituting the obtained vehicle control parameter into a preset second correlation matrix model to obtain an actual working condition parameter of the electric drive system" further comprises:
obtaining an operating parameter of the electric drive system; and
substituting the obtained vehicle control parameter and the operating parameter into a preset fourth correlation matrix model to obtain the actual working condition parameter of the electric drive system, wherein the fourth correlation matrix model is a correlation matrix model between the actual working condition parameter of the electric drive system, the operating parameter of the electric drive system, and the vehicle control parameter of the vehicle.

4. The control method for a vehicle according to claim 1, wherein the step of "determining health of the component of the electric drive system based on the temperature residual value" further comprises:
substituting the temperature residual value into a preset fifth correlation matrix model to obtain the health of the component of the electric drive system, wherein the fifth correlation matrix model is a correlation matrix model between the health of the component of the electric drive system and the temperature residual value of the component.

5. The control method for a vehicle according to claim 2, wherein the step of "substituting the obtained vehicle control parameter into a preset second correlation matrix model to obtain an actual working condition parameter of the electric drive system" further comprises:
substituting the vehicle control parameter into the preset second correlation matrix model to obtain a first actual working condition parameter of the electric drive system;
obtaining a second actual working condition parameter of the electric drive system that is measured a first preset time earlier; and
substituting the first actual working condition parameter and the second actual working condition parameter into a preset first fitting formula to obtain the actual working condition parameter of the electric drive system, wherein the first fitting formula is specifically as follows: m₃ = K₁m₁ + K₂m₂, wherein K₁ and K₂ are fitting coefficients, m₁ is the first actual working condition parameter, m₂ is the second actual working condition parameter, and m₃ is the actual working condition parameter of the electric drive system.

6. The control method for a vehicle according to claim 2, wherein the step of "substituting the obtained vehicle control parameter into a preset second correlation matrix model to obtain an actual working condition parameter of the electric drive system" further comprises:
obtaining the vehicle control parameter of the vehicle, namely, a first vehicle control parameter;
obtaining a vehicle control parameter of the vehicle that is measured a second preset time earlier, namely, a second vehicle control parameter;
substituting the first vehicle control parameter and the second vehicle control parameter into a preset second fitting formula to obtain a third vehicle control parameter, wherein the second fitting formula is specifically as follows: n₃ = P₁n₁ + P₂n₂, wherein P₁ and P₂ are fitting coefficients, n₁ is the first vehicle control parameter, n₂ is the second vehicle control parameter, and n₃ is the third vehicle control parameter; and
substituting the third vehicle control parameter into the preset second correlation matrix model to obtain the actual working condition parameter of the electric drive system.

7. The control method for a vehicle according to claim 4, wherein after the step of "substituting the temperature residual value into a preset fifth correlation matrix model to obtain the health of the component of the electric drive system", the control method further comprises:
generating an alarm when the health of the component is poor.

8. The control method for a vehicle according to claim 1, wherein the step of "determining health of the component of the electric drive system based on the temperature residual value" further comprises:
when the temperature residual value is greater than or equal to a first preset temperature value, determining that the health of the component of the electric drive system is poor; and/or
when the temperature residual value is less than the first preset temperature value, determining that the health of the component of the electric drive system is good.

9. The control method for a vehicle according to claim 1, wherein a step of establishing the preset first correlation matrix model comprises:
generating an initial first correlation matrix model; and
training the initial first correlation matrix model to obtain the preset first correlation matrix model.

10. A vehicle, comprising a processor and a memory, wherein the memory is adapted to store a plurality of program codes, and the program codes are adapted to be loaded and run by the processor to perform a control method for a vehicle according to any one of claims 1 to 9.
